**Europäisches Patentamt**

**European Patent Office**

**Office européen des brevets**

(19)

(11) Veröffentlichungsnummer: **0 032 961**
**B1**

(12) **EUROPÄISCHE PATENTSCHRIFT**

(45) Veröffentlichungstag der Patentschrift:
31.08.83

(51) Int. Cl.³: **B 62 D 55/28**

(21) Anmeldenummer: **80100377.3**

(22) Anmeldetag: **25.01.80**

(54) **Bodenplatte für Gleisketten von Gleiskettenfahrzeugen.**

(43) Veröffentlichungstag der Anmeldung:
**05.08.81 Patentblatt 81/31**

(45) Bekanntmachung des Hinweises auf die Patenterteilung:
**31.08.83 Patentblatt 83/35**

(84) Benannte Vertragsstaaten:
**AT BE CH FR GB IT LU NL SE**

(56) Entgegenhaltungen:
**DE-B-2 105 482**
**DE-C-2 607 981**
**FR-A-1 421 494**
**US-A-2 219 221**
**US-A-2 369 130**
**US-A-3 944 296**

(73) Patentinhaber: **Hermann Fehling Tief- und Kulturbau, Amtsallee 19, D-2855 Beverstedt (DE)**

(72) Erfinder: **Fehling, Hermann, Amtsallee 19, D-2855 Beverstedt (DE)**

(74) Vertreter: **Goddar, Heinz, Dr. et al, FORRESTER & BOEHMERT Widenmayerstrasse 4/I, D-8000 München 22 (DE)**

Bodenplatte für Gleisketten von Gleiskettenfahrzeugen

Die Erfindung betrifft eine Bodenplatte für Gleisketten von Gleiskettenfahrzeugen zum Einsatz auf weniger tragfähigen Böden, welche durch Schraubenbolzen mit den Kettenlaschen der Gleiskette verbindbar ist, mit einem Widerlager zur Aufnahme der Schraubenbolzen und mit einem langgestreckten, plattenförmigen Kunstoffkörper, dessen in Plattenlängsrichtung gesehen beiderseits des Widerlagers angeordnete Ansätze von dem im Bereich des Widerlagers liegenden Sohlenbereich der Bodenplatte aus in Richtung auf die Kettenlaschen angeschrägt sind, wobei der Kunstoffformkörper und das Widerlager als einstückige Bodenplatte ausgebildet sind, die im wesentlichen vollständig aus einem gummielastisch vernetzten Polyurethan bestehen, der Bereich des Widerlagers der Bodenplatte rechteckigen oder nahezu rechteckigen Querschnitt aufweist und massiv ausgebildet ist und die beiden Ansätze in Richtung auf die Kettenlaschen hin abbiegbar ausgebildet sind.

Die Bodenplatte von Gleiskettenfahrzeugen für weniger tragfähige Böden müssen eine möglichst grosse Ausdehnung besitzen, um das Gewicht zur Erzielung eines geringeren Einsinkens des Fahrzeugs auf einer möglichst grossen Fläche zu verteilen.

Derartige Bodenplatten für Gleisketten zum Einsatz auf weniger tragfähigen Böden sind aus der DE-C Nr. 2607981 bekannt geworden. Bei dieser bekannten Bodenplatte hat es sich jedoch als nachteilig herausgestellt, dass die Bodenplatte keine genügende Festigkeit gegenüber Durchhängen bzw. Durchbiegen bieten.

Aus der US-A Nr. 3944296 sind Bodenplatte für Gleiskettenfahrzeuge, welche auf Asphalt laufen, bekannt geworden, bei welchen ein Metallgrundkörper durch eine Polyurethanschicht überzogen ist, welche das harte Auftreffen von Bodenplatten durch die dämpfende Schicht von Urethan mildert.

Derartige Bodenplatte sind jedoch für den Einsatz auf weniger tragfähigen Böden nicht geeignet, da sie in sich steif sind und sich Unebenheiten des Bodens nicht hinreichend anpassen können.

Der Erfindung liegt daher die Aufgabe zugrunde, die bekannten Bodenplatten dahingehend weiterzubilden, dass ein zufriedenstellendes Verhalten von Gleiskettenfahrzeugen auf wenig tragfähigen Böden erhalten wird, insbesondere die Geländegängigkeit erheblich erhöht wird.

Diese Aufgabe wird erfindungsgemäss dadurch gelöst, dass die Bodenplatte wenigstens eine in Plattenlängsrichtung langgestreckte Einlage aus biegeelastischem Material aufweist, dessen Biegemodul wesentlich grösser ist als derjenige des gummielastisch vernetzten Polyurethans.

Die Vorteile, die durch dieses Vorsehen von elastischen Einlagen erzielt werden, bestehen hauptsächlich darin, dass die Platte nun in allen Richtungen elastisch verformbar ist und demzufolge zwar aufgrund der Einlage eine höhere Widerstandsfähigkeit gegenüber Durchhängen bietet, jedoch immer noch genügend anpassungsfähig an den Boden ist, so dass eine bessere Bodenhaftung und somit eine bessere Beweglichkeit des Fahrzeugs erzielt wird. Dies ist inbesondere dann vorteilhaft, wenn das Fahrzeug auf geneigten Böden arbeiten soll oder auf unebenen Böden, da dadurch immer ein optimaler Bodenkontakt möglich ist.

Eine weitere bevorzugte Ausführungsform der Erfindung besteht darin, dass als Einlage Glasfibermaterial verwendet wird, welches sich durch extreme Korrosionsbeständigkeit auszeichnet. Weiterhin können bei besonders beanspruchten Bodenplatte auch Whisker, vorzugsweise in Form von Kohlenstoffasern verwandt werden, welche eine erhöhte elastische Widerstandsfähigkeit der Bodenplatte bewirken.

Dabei ist die Verwendung von Polyurethan deshalb besonders vorteilhaft, da dieser Kunstoff bei Temperaturen bis zu −40°C elastische Eigenschaften zeigt, die ihn auch dieser Temperatur einsetzbar halten.

Eine besonders bevorzugte Ausführungsform besteht darin, dass eine einzige Einlage aus Federstahl derart in die Bodenplatte hineingelegt wird, dass sie sich über die gesamte bodenflächenparallele Querschnittsfläche erstrecken kann, wobei dann die Bohrungen für die Aufnahme der Schraubenbolzen durch die Federstahleinlage hindurchgebohrt werden. Es können auch mehrere Federstahllagen vorgesehen sein, die dann derart ausgebildet sind, dass sie verschiedene Längen besitzen, um eine Anpassung an die Abschrägung der Bodenplatte zu ermöglichen.

Weitere Merkmale und Vorteile der Erfindung ergeben sich aus der nachfolgenden Beschreibung, in der Ausführungsbeispiele anhand der schematischen Zeichnungen im einzelnen erläutert sind. Dabei zeigt:

Fig. 1 ein Auführungsbeispiel einer Bodenplatte nach der Erfindung in der Draufsicht, von der den Kettenlaschen zugewandten Fläche her gesehen;

Fig. 2 einen Schnitt entlang der Linie II-II' von Fig. 1;

Fig. 3 ein weiteres Ausführungsbeispiel einer Bodenplatte gemäss der Erfindung in der Draufsicht, von der den Kettenlaschen zugewandten Seite her gesehen;

Fig. 4 ein Ausführungsbeispiel von Fig. 3, entlang der Linie IV-IV' gesehen, und

Fig. 5 eine weitere bevorzugte Ausführungsform der erfindungsgemässen Bodenplatte, eine Draufsicht auf einen Querschnitt entlang einer Schnittlinie, welche der in Fig. 2 angegebenen Schnittlinie IV-IV' entspricht.

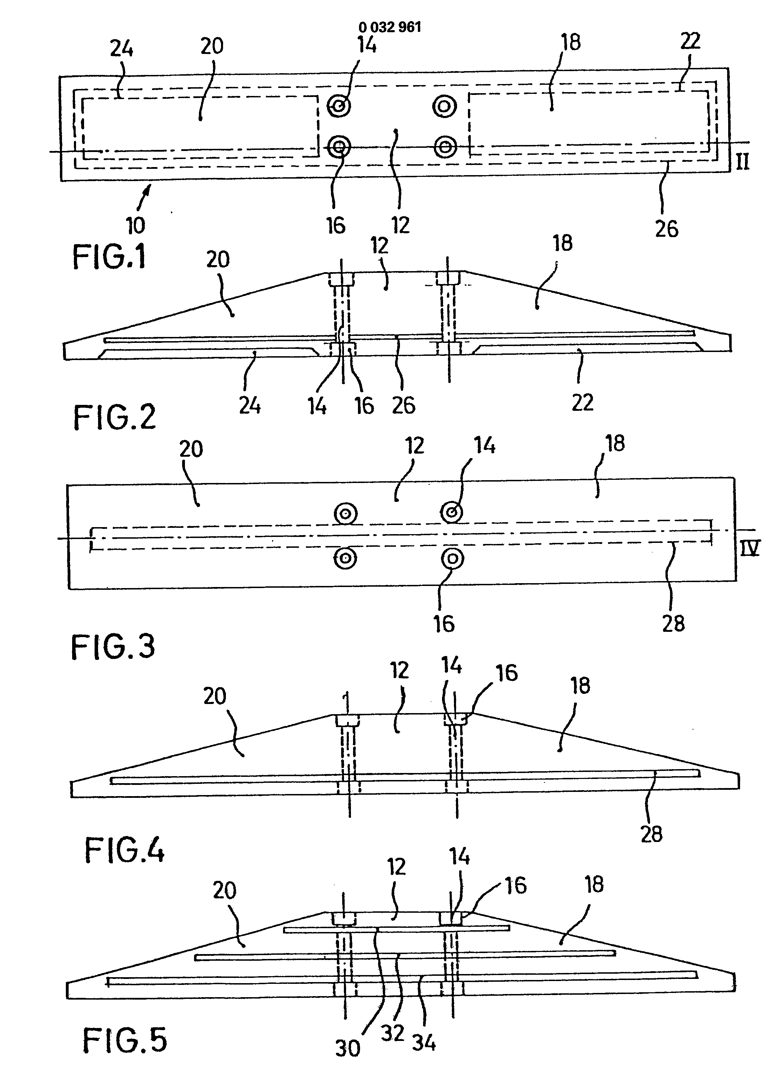

Wie Fig. 1 zeigt, weist eine im ganzen mit 10 bezeichnete Bodenplatte, die im wesentlichen aus gummielastisch vernetztem, zähen Polyurethan hergestellt ist, ein Widerlager 12 auf, in dem vier Bohrungen 14 zur Aufnahme von Schraubenbolzen oder dergleichen vorgesehen sind, mittels welcher die Bodenplatte an den Kettenlaschen der Gleiskette angebracht werden kann. An der Sohlenfläche der Bodenplatte 10 weist das Widerlager 12, welches massiv aus der Kunststoffmasse mit Einlage besteht, Vertiefungen 16 auf, in denen die Köpfe der Schraubenbolzen oder dergleichen versenkt angeordnet werden können, wodurch gewährleistet ist, dass mit der Unterlage, auf der das Gleiskettenfahrzeug bewegt wird, keinerlei Metallteile in Berührung kommen.

Beiderseits des Widerlagerbereichs 12 weist der Kunststofformkörper 10 Ansätze 18, 20 auf, die von der Sohle der Bodenplatte aus seitlich des Widerlagers schräg nach aussen und oben zulaufen, wodurch die Wendewilligkeit des Gleiskettenfahrzeugs erhöht wird. Beide Ansätze 18 und 20 können, wie in Fig. 1 und 2 dargestellt, Ausnehmungen in der Sohlenfläche 22 und 24 aufweisen.

Wie in Fig. 2 gezeigt und auch aus Fig. 1 ersichtlich, weist der Kunststofformkörper eine Einlage 26 aus biegeelastischem Material auf, die sich über die gesamte Sohlenfläche der Bodenplatte derart erstreckt, dass die Bohrungen 14 durch diese Einlage 26 hindurchführen.

Aus Fig. 3 wird ein weiteres bevorzugtes Ausführungsbeispiel ersichtlich, in dem eine einzige lattenförmige Einlage 28, die bevorzugt aus Glasfasermaterial hergestellt wird, zur Bodenfläche des Kunststofformkörpers derart angeordnet ist, dass, wie aus Fig. 4 ersichtlich, ein Durchbohren der Einlage 28 nicht erforderlich ist.

Aus Fig. 5 wird ein weiteres bevorzugtes Ausführungsbeispiel der erfindungsgemässen Bodenplatte ersichtlich, bei der mehrere, übereinander angeordnete Einlagen 30, 32 und 34 den Biegemodul der Bodenplatte erhöhen. Nun soll die Erfindung anhand eines Beispiels weiter erläutert werden.

*Beispiel*

Bei einer besonders bevorzugten Anwendung der Erfindung werden Glasfiberlatten von einer Breite von 40 mm und einer Dicke von 12 mm so übereinander angeordnet, dass der gegenseitige Abstand 10 mm beträgt, bei einer Gesamtdicke der Bodenplatte von 100 mm und einen Abstand der unteren Glasfiberlatte von der Lauffläche von 20 mm und einem Abstand der oberen Glasfiberlatte von der Widerlagerfläche von 24 mm.

**Patentansprüche**

1. Bodenplatte für Gleisketten von Gleiskettenfahrzeugen zum Einsatz auf weniger tragfähigen Böden, welche durch Schraubenbolzen mit den Kettenlaschen der Gleiskette verbindbar ist, mit einem Widerlager (12) zur Aufnahme der Schraubenbolzen und einem langgestreckten, plattenförmigen Kunststoffkörper (10), dessen in Plattenlängsrichtung gesehen beiderseits des Widerlagers angeordnete Ansätze (18, 20) von dem im Bereich des Widerlagers (12) liegenden Sohlenbereich der Bodenplatten aus in Richtung auf die Kettenlaschen angeschrägt sind, wobei der Kunststofformkörper (10) und das Widerlager (12) als einstückige Bodenplatte ausgebildet sind, die im wesentlichen volständig aus einem gummielastisch vernetzten Polyurethan bestehen, der Bereich des Widerlagers (12) der Bodenplatte rechteckigen oder nahezu rechteckigen Querschnitt aufweist und massiv ausgebildet ist und die beiden Ansätze in Richtung auf die Kettenlaschen hin abbiegbar ausgebildet sind, dadurch gekennzeichnet, dass die Bodenplatte (10) wenigstens eine in Plattenlängsrichtung langgestreckte Einlage (26, 28, 30, 32 oder 34) aus biegeelastischem Material aufweist, dessen Biegemodul wesentlich grösser ist als derjenige des gummielastisch vernetzten Polyurethans.

2. Bodenplatte nach Anspruch 1, dadurch gekennzeichnet, dass die plattenförmige(n) Einlage(n) (26, 28, 30, 32 oder 34) aus einem Material mit höherer Biegefestigkeit als gummiartig netzendes Polyurethan sich parallel zur gesamten Sohlenfläche der Bodenplatte derart erstreckt (erstrecken), dass es (sie) vollständig von Kunststoff umhüllt ist (sind), die Bohrungen (14) durch sie hindurchgehen und die Einlage an keiner Stelle der Bodenplatte aus dem Polyurethan heraustritt.

3. Bodenplatte nach Anspruch 2, dadurch gekennzeichnet, dass als Einlage Federstahl verwendet wird.

4. Bodenplatte nach den Ansprüchen 1 und 2, dadurch gekennzeichnet, dass für die elastischen Einlagen Glasfibermaterial verwendet wird.

5. Bodenplatte nach Anspruch 1, dadurch gekennzeichnet, dass als Einlagen Whisker, vorzugsweise in Form von Kohlenstoffasern, verwendet werden.

**Claims**

1. A base-plate for the tracks of track-laying vehicules for use on soft ground, the plate being adapted to be connected by screw-threaded fasteners to links of the track, the plate having an abutment (12) to receive the screw-threaded fasteners and an elongated plate-like plastic member (10) having projections (18, 20) which are disposed on both sides of the abutment (12), as considered lengthwise of the plate, and which are bevelled outwardly towards the chain links from the base-plate sole zone near the abutment (12), the plastic moulding (10) and the abutment (12) taking the form of an integral base-plate made substantially entirely of a resiliently cross-linked polyurethane, the region of the base-plate abutment (12) being in cross-section rectangular or substantially so and being solid, the two projections being bendable towards the chain links, characterized in that the base-plate (10) has at least one insert (26, 28, 30, 32 or 34) which is elongated in the direction of plate length and is made of a bendable substance and whose bending modulus is substantially greater than the bending modulus of the resiliently cross-linked polyurethane.

2. A base-plate according to claim 1, characterized in that the or each plate-like insert (26, 28, 30, 32 or 34) made of a material having greater bending strength than resiliently cross-linked polyurethane so extends parallel to the base-plate sole surface as to be completely enveloped by plastic and so that the bores (14) extend through such insert or inserts and the insert does not project from the polyurethane in any part of the base-plate.

3. A base-plate according to claim 2, characterized in that spring steel is used as insert.

4. A base-plate according to claims 1 and 2, characterized in that glass-fibre material is used for the resilient inserts.

5. A base-plate according to claim 1, characterized in that whiskers, more particularly in the form of carbon fibres, are used as inserts.

**Revendications**

1. Plaque de sol pour chenilles de véhicules à chenilles destinés à être utilisés sur des terrains peu porteurs, qui peut être reliée par des boulons aux maillons de la chenille, et comporte un élément d'appui (12) pour recevoir les boulons et un corps (10) allongé, en forme de plaque, en matière plastique, dont les prolongements (18, 20) disposés de chaque côté de l'élément d'appui, vus dans le sens longitudinal de la plaque, sont biseautés depuis la zone de semelle des plaques de sol située dans la zone de l'élément d'appui (12) en direction des maillons de la chenille, le corps en matière plastique (10) et l'élément d'appui (12) étant réalisés sous forme de plaque de sol d'une seule pièce, constituée pratiquement complètement d'un polyuréthanne réticulé ayant l'élasticité du caoutchouc, la zone de l'élément d'appui (12) de la plaque de sol ayant une section transversale rectangulaire ou pratiquement rectangulaire et étant pleine, et les deux prolongements pouvant s'infléchir en direction des maillons de la chenille, caractérisée par le fait que la plaque de sol (10) comporte au moins une pièce intérieure (26, 28, 30, 32 ou 34) en matériau élastique, s'étendant dans le sens longitudinal de la plaque, dont le module de flexion est sensiblement supérieur à celui du polyuréthanne réticulé ayant l'élasticité du caoutchouc.

2. Plaque de sol selon la revendication 1, caractérisée par le fait que la (les) pièce(s) intérieure(s) (26, 28, 30, 32 ou 34) en forme de plaque, en un matériau ayant une résistance à la flexion plus élevée que le polyuréthanne réticulé ayant l'élasticité du caoutchouc, s'étend(ent) parallèlement à toute la surface de semelle de la plaque de sol, de sorte qu'elle(s) est (sont) complètement enrobée(s) dans la matière plastique, que les alésages (14) la (les) traversent complètement et que la pièce intérieure ne sort du polyuréthanne en aucun endroit de la plaque de sol.

3. Plaque de sol selon la revendication 2, caractérisée par le fait qu'on utilise comme élément intérieur de l'acier à ressort.

4. Plaque de sol selon les revendications 1 et 2, caractérisée par le fait qu'on utilise pour les éléments intérieurs élastiques un matériau en fibres de verre.

5. Plaque de sol selon la revendication 1, caractérisée par le fait qu'on utilise comme éléments intérieurs des trichites (whiskers), de préférence sous forme de fibres de carbone.

0 032 961

FIG.1

FIG.2

FIG.3

FIG.4

FIG.5

5